# EUROPÄISCHE PATENTSCHRIFT

(11) **EP 1 625 455 B1**
(45) Veröffentlichungstag und Bekanntmachung des Hinweises auf die Patenterteilung: **27.12.2006**
(21) Anmeldenummer: 04739167.7
(22) Anmeldetag: 11.05.2004
(51) Int. Cl.: G05D 1/02

(54) **STEUERUNGSSYSTEM FÜR EIN FAHRZEUG**
VEHICLE CONTROL SYSTEM
SYSTEME DE COMMANDE POUR VEHICULE

(30) Priorität: 19.05.2003 DE 10322829
(43) Veröffentlichungstag der Anmeldung: 15.02.2006
(73) Patentinhaber: DaimlerChrysler AG, 70567 Stuttgart (DE); Götting KG, 31275 Lehrte/Röddensen (DE)
(72) Erfinder: GÖTTING, Hans, Heinrich, 31275 Lehrte/Röddensen (DE); SCHERF, Helmut, 76133 Karlsruhe (DE); SCHUMACHER, Walter, 38312 Ohrum (DE); SCHWARZHAUPT, Andreas, 74420 Oberrot (DE); SPIEGELBERG, Gernot, 71296 Heimsheim (DE)
(86) Internationale Anmeldenummer: PCT/EP2004/005009
(87) Internationale Veröffentlichungsnummer: WO 2004/102297

(56) Entgegenhaltungen:
- EP-A- 0 556 031
- DE-A- 10 032 179
- DIVELBISS A W ET AL: "TRAJECTORY TRACKING CONTROL OF A CAR-TRAILER SYSTEM" IEEE TRANSACTIONS ON CONTROL SYSTEMS TECHNOLOGY, IEEE INC. NEW YORK, US, Bd. 5, Nr. 3, 1. Mai 1997 (1997-05-01), Seiten 269-278, XP000656533 ISSN: 1063-6536

## Beschreibung

Die vorliegende Erfindung betrifft ein Steuerungssystem für ein Fahrzeug, insbesondere für ein Gespann aus Zugfahrzeug und Anhänger, mit den Merkmalen des Oberbegriffs des Anspruchs 1.

Aus der DE 100 32 179 A1 ist ein derartiges Fahrzeugsteuerungssystem bekannt, bei dem das Fahrzeug mit einem elektronisch ansteuerbaren Antriebsstrang ausgestattet ist, der wenigstens eine Lenkungsanlage, eine Bremsanlage sowie ein Antriebsaggregat umfasst. Eine im Fahrzeug fest installierte Bedieneinrichtung definiert dabei eine Eingabeebene, über die ein Fahrzeugführer einen Fahrerwunsch eingeben kann und die aus dem Fahrerwunsch einen standardisierten Bewegungsvektor generiert. Eine Steuereinrichtung definiert eine Koordinationsebene, die aus dem eingangsseitigen Bewegungsvektor ausgangsseitig Steuersignale zum Ansteuern des Antriebsstrangs generiert. Die Steuereinrichtung ist dabei zur Übertragung der Steuersignale mit dem Antriebsstrang gekoppelt, der dann die Steuersignale zur Umsetzung des Fahrerwunsches abarbeitet. Das bekannte Steuerungssystem zeichnet sich durch eine hohe Variabilität aus, da besonders einfach unterschiedlich gestaltete Eingangsebenen und unterschiedlich gestaltete Koordinationsebenen miteinander kombiniert werden können, sofern die Umsetzung des Fahrerwunsches in die Steuersignale stets über die standardisierten Bewegungsvektoren erfolgt.

Bei Nutzfahrzeugen, wie z.B. Lastkraftwagen, ist zum Rangieren, vorzugsweise zum Rückwärtsfahren ein Einweiser erforderlich, um eine Kollisionsgefahr zwischen dem Fahrzeug und einem Hindernis zu reduzieren. Darüber hinaus gestaltet sich das Rangieren und vor allem das Rückwärtsfahren bei einem Gespann aus Zugfahrzeug und Anhänger aufgrund der gegebenen kinematischen Kopplung besonders schwierig.

Das Erfordernis eines Einweisers ist zumindest bei einem Lastkraftwagen aus ökonomischer Sicht extrem störend, da der Lastkraftwagen im Betrieb hauptsächlich seine Transportfunktion erfüllt, in welcher kein Einweiser erforderlich ist, und im Vergleich dazu nur für einen extrem kurzen Abschnitt seiner Betriebszeit rangiert werden muss. Es besteht daher der Wunsch, den Einweiser einzusparen.

Die vorliegende Erfindung beschäftigt sich mit dem Problem, für ein Steuerungssystem der eingangs genannten Art eine verbesserte Ausführungsform anzugeben, die insbesondere das Rangieren des Fahrzeugs vereinfacht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, mit Hilfe eines Bahnrechners eine Bewegungsbahn zu berechnen, die eine Abfolge von Bewegungsvektoren bereitstellt, die, wenn sie abgearbeitet werden, das Fahrzeug von einer Startposition in eine Zielposition überführen. Die Startposition kann dabei durch Istwerte für die Lage und Position des Fahrzeugs definiert werden, die mit Hilfe einer geeignete Lage- und Positionsbestimmungseinrichtung bestimmbar sind. Für die Zielposition werden Sollwerte für die Lage und Position des Fahrzeugs verwendet, die mit Hilfe einer Zieleingabeeinrichtung vorgebbar sind. Von besonderer Bedeutung ist dabei, dass der Bahnrechner die ermittelten Bewegungsvektoren über eine Antriebsstrang-Schnittstelle zur Steuereinrichtung übermittelt, über die auch die fahrzeugfeste Bedieneinrichtung die Bewegungsvektoren an die Steuereinrichtung übermittelt. Bei der Berechnung der Bewegungsbahn kann der Bahnrechner die kinematischen und dynamischen Eigenschaften des Fahrzeugs berücksichtigen. Hierdurch wird erreicht, dass das Fahrzeug entlang einer optimalen und insbesondere gefahrlosen Bewegungsbahn geführt wird. Das Rangieren des Fahrzeugs kann durch die Vorgabe der Sollwerte und durch die Überwachung der Istwerte automatisiert und für den Fahrer erheblich vereinfacht werden. Insbesondere kann ein Einweiser eingespart werden.

Bei einer vorteilhaften Weiterbildung ist der Bahnrechner zur Berechnung einer solchen Bewegungsbahn ausgebildet, in welcher das Fahrzeug rückwärts fährt oder welche zumindest einen Bewegungsbahnabschnitt enthält, in dem das Fahrzeug rückwärts fährt. Diese Ausführungsform wirkt sich dann besonders vorteilhaft aus, wenn es sich beim Fahrzeug um ein Gespann aus einem Zugfahrzeug und einem Anhänger handelt, da das Rückwärtsfahren eines Gespanns extrem schwierig und auch für erfahrene Fahrer zeitaufwendig ist. Durch die Berechnung der Rückwärtsfahrt und das Abarbeiten der dafür erforderlichen Bewegungsvektoren kann beim erfindungsgemäßen Steuerungssystem das Fahrzeug regelmäßig beim ersten Versuch die gewünschte Zielposition erreichen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch:
- Fig. 1: eine stark vereinfachte, schaltplanartige Prinzipskizze eines erfindungsgemäßen Steuerungssystems,
- Fig. 2: eine Draufsicht auf ein Gespann als Prinzipdarstellung,
- Fig. 3: eine Draufsicht wie in Fig. 2, jedoch bei einem anderen Gespann,
- Fig. 4: eine Draufsicht auf ein Gespann wie in Fig. 2, jedoch mit Fahrwegabschnitten des Fahrzeugs.

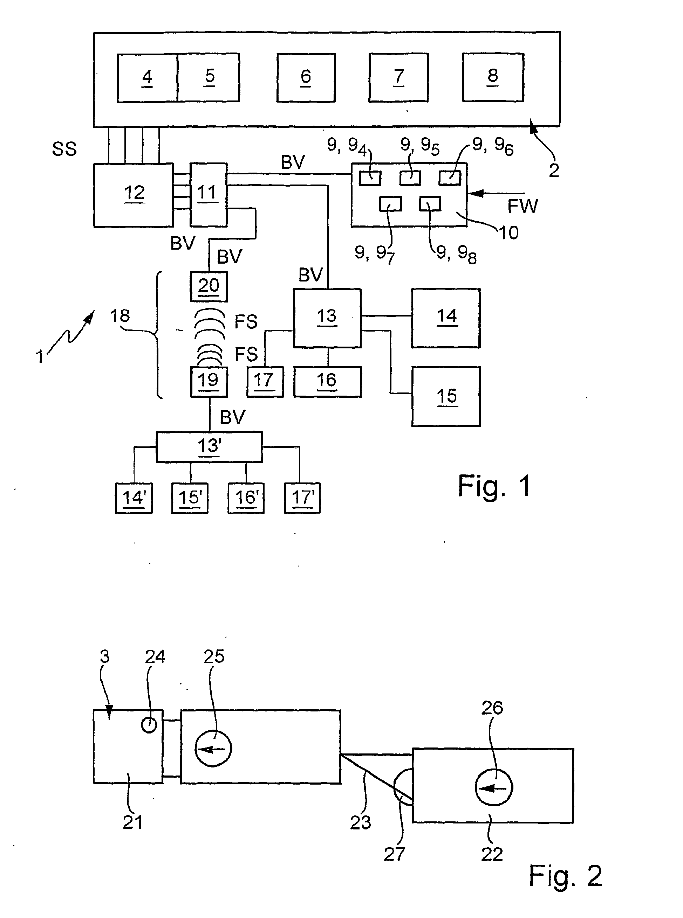

Entsprechend Fig. 1 umfasst ein erfindungsgemäßes Steuerungssystem 1 einen Antriebsstrang 2 eines in den Fig. 2 bis 4 gezeigten Fahrzeugs 3. Das Steuerungssystem 1 arbeitet dabei mit einem elektronisch ansteuerbaren Antriebsstrang 2 und kann daher auch als Drive-By-Wire-System oder X-By-Wire-System bezeichnet werden. Der Antriebsstrang 2 umfasst hier ein Antriebsaggregat 4, ein Getriebe 5, eine Lenkungsanlage 6, eine Bremsanlage 7 sowie eine Niveauregulierungseinrichtung 8. Es ist klar, dass der Antriebsstrang 2 bei einer anderen Ausführungsform auch mehr oder weniger Komponenten 4 bis 8 aufweisen kann. Bei einem elektronisch ansteuerbaren Antriebsstrang 2 besteht zwischen den einzelnen Komponenten 4 bis 8 des Antriebsstrangs 2 und Bedienelementen 9, die in der Regel in einem Cockpit des Fahrzeugs 3 angeordnet sind, keine durchgehende mechanische oder hydraulische Verbindung. Bei den Bedienelementen 9, die zusammen eine Bedieneinrichtung 10 des Steuerungssystems 1 bilden, handelt es sich beispielsweise um ein Gaspedal 9₄, eine Gangschaltung 9₅, ein Lenkrad 9₆, ein Bremspedal 9₇ und ein Regulierelement 9₈ für die Niveauregulierung 8 des Fahrzeugs 3.

Über die Bedienelemente 9 kann ein Fahrzeugführer einen Fahrerwunsch FW in die Bedieneinrichtung 10 eingeben. Die Bedieneinrichtung 10 generiert dann aus dem eingangsseitigen Fahrerwunsch FW einen Bewegungsvektor BV, den sie ausgangsseitig an eine Antriebsstrang-Schnittstelle 11 übermittelt. Die Antriebsstrang-Schnittstelle 11 gibt den Bewegungsvektor BV an eine Steuereinrichtung 12 weiter. Da es sich hier um einen standardisierten Bewegungsvektor BV handelt, kann die Steuerungseinrichtung 12 aus dem Bewegungsvektor BV Steuersignale SS generieren und diese an den Antriebsstrang 2 in geeigneter Weise übermitteln. Der Antriebsstrang 2 kann dann die eingehenden Steuersignale SS abarbeiten, wodurch der Fahrerwunsch FW umgesetzt wird.

Für die Signalübertragung zwischen Steuerungseinrichtung 12 und Antriebsstrang 2 bzw. dessen Komponenten 4 bis 8 wird im Übrigen auf die weiter oben genannte DE 100 32 179 A1 verwiesen, deren Inhalt hiermit durch ausdrückliche Bezugnahme in den Offenbarungsgehalt der vorliegenden Erfindung einbezogen wird.

Das erfindungsgemäße Steuerungssystem 1 umfasst außerdem einen Bahnrechner 13, der ebenfalls an die Antriebsstrang-Schnittstelle 11 angeschlossen ist und der mit einer Lage- und Positionsbestimmungseinrichtung 14 sowie mit einer Zieleingabeeinrichtung 15 kommuniziert.

Mit Hilfe der Lage- und Positionsbestimmungseinrichtung 14 können fortlaufend Istwerte für die Lage sowie für die Position des Fahrzeugs 3 bestimmt werden. Unter "Position" wird hierbei der geographische Ort des Fahrzeugs 3 verstanden, während mit "Lage" die Ausrichtung einer Längsrichtung des Fahrzeugs 3 gegenüber einem geographischen Koordinatensystem, vorzugsweise gegenüber den Himmelsrichtungen bezeichnet wird. Diese Istwerte werden von der Lage- und Positionsbestimmungseinrichtung 14 dem Bahnrechner 13 übermittelt.

In die Zieleingabeeinrichtung 15 können Sollwerte für die Lage und Position des Fahrzeugs 3 eingegeben werden, was beispielsweise manuell oder automatisiert erfolgen kann. Diese Sollwerte, also die Soll-Lage und die Soll-Position definieren dabei eine Ziel-Lage und Ziel-Position, die das Fahrzeug 3 am Ende seiner Bewegung einnehmen soll. Beispielsweise soll ein als Lastkraftwagen ausgebildetes Fahrzeug 3 so an eine Verladerampe herangefahren werden, dass unmittelbar mit dem Be- und Entladen des Fahrzeugs 3 begonnen werden kann. Die Zieleingabevorrichtung 15 ist zur Übertragung der Sollwerte mit dem Bahnrechner 13 gekoppelt.

Der Bahnrechner 13 ist nun so ausgestaltet, dass er aus den eingehenden Istwerten und den eingehenden Sollwerten eine Bewegungsbahn berechnet, wobei diese Bewegungsbahn durch eine Abfolge von standardisierten Bewegungsvektoren BV gebildet ist. Die Bewegungsbahn ist dabei so berechnet, dass sie das Fahrzeug 3 ausgehend von der Ist-Lage und der Ist-Position in die Soll-Lage und die Soll-Position überführt, wenn der Antriebsstrang 2 die Bewegungsvektoren BV der Bewegungsbahn abarbeitet. Da der Bahnrechner 13 erfindungsgemäß über die Antriebsstrang-Schnittstelle 11 mit der Steuereinrichtung 12 gekoppelt ist, kann die Steuereinrichtung 12 die vom Bahnrechner 13 generierten Bewegungsvektoren BV entsprechend der Bewegungsbahn in Steuersignale SS umwandeln, die der Antriebsstrang 2 genauso abarbeitet, als kämen die Bewegungsvektoren BV von der Bedieneinrichtung 10.

Aufgrund des Aufbaus des Steuerungssystems 1 kann der Bahnrechner 13 besonders einfach in das Steuerungssystem 1 integriert werden, ohne dass hierzu ein erhöhter Aufwand erforderlich ist.

Bei der Berechnung der Bewegungsbahn kann der Bahnrechner 13 Fahrzeug-Umgebungsbedingungen berücksichtigen, wie z.B. ein Straßenverlauf im Bereich des Fahrzeugs 3 und/oder ein Mindestabstand des Fahrzeugs 3 vor Hindernissen. Um die Fahrzeug-Umgebungsbedingungen dem Bahnrechner 13 mitteilen zu können, kann eine Eingabeeinrichtung 16 vorgesehen sein, in welche die Fahrzeug-Umgebungsbedingungen eingebbar sind. Diese Eingabeeinrichtung 16 kann bei einer zweckmäßigen Ausführungsform bereits in die Zieleingabeeinrichtung 15 integriert sein. Bei den Eingabeeinrichtungen 15, 16 kann es sich beispielsweise um eine Tastatur und/oder um ein entsprechendes Lesegerät handeln. Des Weiteren kann eine Sensorik 17 vorgesehen sein, die so ausgestaltet ist, dass sie in der Umgebung des Fahrzeugs 3 vorgegebene Bedingungen, wie z.B. Straßenrand und Abstandswerte, sensiert und dem Bahnrechner 13 übermittelt.

Die Lage- und Positionsbestimmungseinrichtung 14 ist zweckmäßig so ausgestaltet, dass sie permanent die Istwerte des Fahrzeugs 3 ermittelt. Beispielsweise ändern sich die Istwerte für Lage und Position beim Abarbeiten der Bewegungsvektoren BV der errechneten Bewegungsbahn. Zweckmäßig ist der Bahnrechner 13 so gestaltet, dass er die Bewegungsbahn anhand der neuen, aktuellen Istwerte fortlaufend aktualisiert und neu errechnet. Bei dieser Vorgehensweise reicht es aus, die Bewegungsbahn anfangs nur relativ grob zu bestimmen und erst mit der Annäherung an das Ziel genauer vorzugeben. Durch die permanente Aktualisierung der Bewegungsbahn können auch während der Bewegung des Fahrzeugs 3 hinzukommende oder sich ändernde Fahrzeug-Umgebungsbedingungen berücksichtigt werden.

In Fig. 1 ist eine weitere, spezielle Ausführungsform wiedergegeben, bei welcher das Steuerungssystem 1 eine Sender-Empfänger-Anordnung 18 umfasst, die durch eine geschweifte Klammer gekennzeichnet ist. Diese Anordnung 18 besitzt zumindest einen Sender 19 sowie wenigstens einen Empfänger 20.

Der Bahnrechner 13 und die daran angeschlossenen Komponenten 14 bis 17 sind zweckmäßig am Fahrzeug 3 fest installiert. Zusätzlich oder alternativ kann jedoch eine Ausführungsform vorgesehen sein, bei welcher der Bahnrechner 13' zusammen mit seiner Peripherie 14' bis 17' vom Fahrzeug 3 entfernt angeordnet ist. Dieser entfernte Bahnrechner 13' ist an dem Sender 19 angeschlossen und übermittelt diesem die Bewegungsvektoren BV der Bewegungsbahn. Der Sender 19 erzeugt aus dem Bewegungsvektoren BV Fernsteuersignale FS, die vom Empfänger 20 empfangen werden. Der Empfänger 20 kann aus diesen Fernsteuersignalen FS wieder die Bewegungsvektoren BV regenerieren und diese über die Antriebsstrang-Schnittstelle 11 der Steuerungseinrichtung 12 übermitteln. Der entfernbare Bahnrechner 13' und der fahrzeugfeste Bahnrechner 13 können alternativ oder kumulativ zur Anwendung kommen. Des Weiteren ist klar, dass auch eine andere Konfiguration fahrzeugfester und entfernbarer Komponenten möglich ist. Beispielsweise kann der Bahnrechner 13 fahrzeugfest sein, während eine oder mehrere seiner peripheren Komponenten 14 bis 17 vom Fahrzeug 3 entfernt angeordnet sind und über eine geeignete Sender-Empfänger-Anordnung mit dem Bahnrechner 13 kommunizieren.

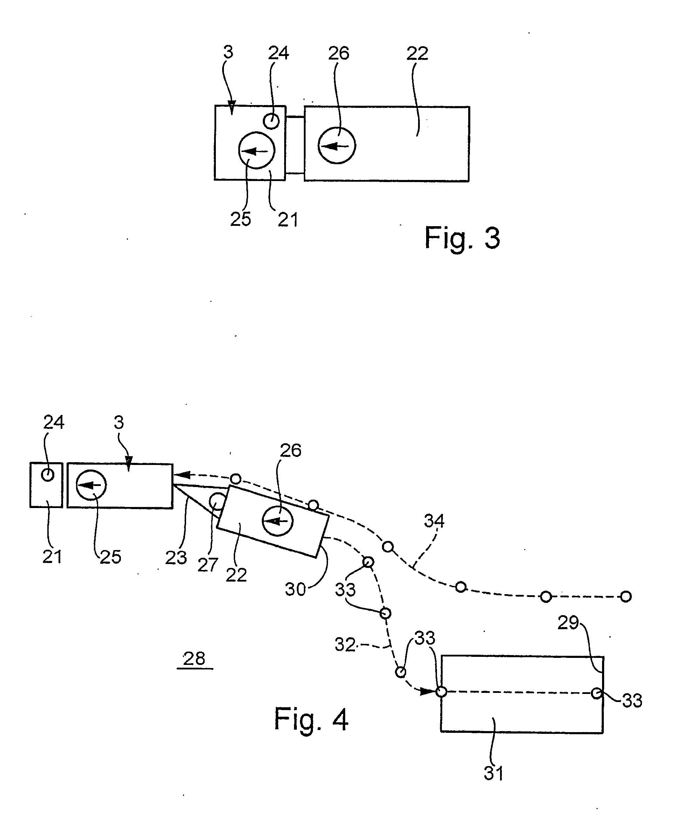

Entsprechend Fig. 2 eignet sich das erfindungsgemäße Steuerungssystem 1 in besonderer Weise für ein als Gespann ausgebildetes Fahrzeug 3, das demnach ein Zugfahrzeug 21 und einen Anhänger 22 aufweist. Bei der Ausführungsform gemäß Fig. 2 handelt es dabei um ein Gespann 3, bei dem der Anhänger 22 über eine Deichsel 23 mit dem Zugfahrzeug 21 gekoppelt ist. Alternativ dazu zeigt Fig. 3 ein anderes Gespann 3, bei dem der Anhänger 22 als Auflieger ausgebildet ist, der somit ohne Deichsel mit der Zugmaschine bzw. mit dem Zugfahrzeug 21 gekoppelt ist.

Sofern es sich bei der Lage- und Positionsbestimmungseinrichtung 14 um eine fahrzeugfeste Einrichtung handelt, kann das Fahrzeug 3 entsprechend den Fig. 2 und 3 mit einem Satellitennavigationsempfänger 24 ausgestattet sein. Des Weiteren ist sowohl das Zugfahrzeug 21 als auch der Anhänger 22 jeweils mit einem elektronisch auslesbaren Kompass 25 bzw. 26 ausgestattet. Bei dem mit der Deichsel 23 arbeitenden Gespann 3 ist außerdem ein Knickwinkelsensor 27 vorgesehen, der den Knickwinkel zwischen Deichsel 23 und Anhänger 22 ermittelt. Zusätzlich oder alternativ kann auch ein Knickwinkelsensor vorgesehen sein, der den Knickwinkel zwischen der Deichsel 23 und dem Zugfahrzeug 21 ermittelt. Für die genauere Funktionsweise und einen detaillierteren Aufbau der fahrzeugfesten Lage- und Positionierbestimmungseinrichtung 14 kann auf die DE 100 31 244 A1 verwiesen werden, deren Inhalt hiermit durch ausdrückliche Bezugnahme zum Offenbarungsgehalt der vorliegenden Erfindung hinzugeführt wird.

Alternativ kann es sich bei der Lage- und Positionsbestimmungseinrichtung 14 auch um eine vom Fahrzeug 3 entfernte Einrichtung handeln, die beispielsweise wie eine Radar-Anlage arbeitet.

Sofern es sich beim Fahrzeug um ein Gespann 3 handelt, ist die Lage- und Positionsbestimmungseinrichtung 14 so ausgebildet, dass damit die Istwerte für die Lage und Position sowohl des Zugfahrzeugs 21 als auch des Anhängers 22 bestimmt werden können. Des Weiteren ist die Zieleingabeeinrichtung 15 dann so ausgestaltet, dass die Sollwerte für die Lage und Position des Zugfahrzeugs 21 und/oder des Anhängers 22 eingebbar sind.

Mit Bezug auf Fig. 4 wird nun ein spezieller Anwendungsfall beschrieben, für das sich das erfindungsgemäße Steuerungssystem 1 in besonderer Weise eignet.

Fig. 4 zeigt einen Ausschnitt auf ein Gelände 28 einer Verladestation, insbesondere eines Speditionshofes. Auf diesem Gelände 28 befindet sich zumindest eine Verladerampe 29, die von dem Gespann 3 z.B. so angefahren werden muss, dass ein Heck 30 des Anhängers 22 etwa frontal vor der Laderampe 29 positioniert ist. Vor der Laderampe 29 befindet sich jedoch nur eine relativ kleine Haltebucht 31, in welche der Anhänger 22 rückwärts hineingefahren werden muss.

Die optimale Zielposition des Anhängers 22 in der Haltebucht 31 an der Rampe 29 stellt hier somit die Zielvorgabe dar, aus der die Sollwerte für die Lage und Position des Anhängers 22 ableitbar sind. Zweckmäßig sind die Soll-Lage und die Soll-Position bekannt und können über die Zieleingabeeinrichtung 15 dem Bahnrechner 13 mitgeteilt werden. Das Gespann 3 befindet sich an einer beliebigen Stelle des Geländes 28, wobei Zugfahrzeug 21 und Anhänger 22 beliebige Lagen aufweisen können. Über die Lage- und Positionsbestimmungseinrichtung 14 erhält der Bahnrechner 13 genaue Kenntnis über die Istwerte von Lage und Position des Zugfahrzeugs 21 und des Anhängers 22. Der Bahnrechner 13 berechnet nun eine Bewegungsbahn für das Gespann 3, deren Bewegungsvektoren BV insbesondere automatisch abgearbeitet werden können. Dabei ist klar, dass die Bewegungsvektoren BV das Antriebsaggregat 4 des Antriebsstrangs 2 zweckmäßig nur so ansteuern, dass sich das Gespann 3 relativ langsam, insbesondere mit Schrittgeschwindigkeit, bewegt. Wie aus Fig. 4 hervorgeht kann die Bewegungsbahn einen Bewegungsbahnabschnitt enthalten, in dem das Gespann 3 rückwärts fährt. In Fig. 4 ist mit unterbrochener Linie ein Fahrwegabschnitt 32 dargestellt, in dem das Gespann 3 eine Rückwärtsfahrt durchführt. Die einzelnen Punkte 33, die entlang des Fahrwegabschnitts 32 angeordnet sind, symbolisieren dabei den Aufbau der Bewegungsbahn, die aus aneinander gereihten Bewegungsbahnstücken zusammengesetzt ist.

Sofern sich die Ausgangsposition des Gespanns 3 dazu eignet, die Zielposition für den Anhänger 22 in der Haltebucht 31 direkt anzufahren, kann dies durch die Automatisierung der Fahrzeugbewegung ohne weiteres erreicht werden. Das Rangieren und insbesondere das Rückwärtsfahren des Gespanns 3 kann dadurch sehr rationell durchgeführt werden. Sofern sich jedoch die Ausgangsposition des Gespanns 3 nicht dazu eignet, die Zielposition in der Haltebucht 31 direkt anzufahren, kann der Bahnrechner 13 bei einer Weiterbildung so ausgestaltet sein, dass die Bewegungsbahn vor der Rückwärtsfahrt entsprechend dem Fahrwegabschnitt 32 eine Vorwärtsfahrt 34 erzeugt, die das Gespann 3 von einer ungünstigen Ausgangsposition in eine günstige Zwischenposition überführt, von der aus das Gespann 3 durch die Rückwärtsfahrt 32 direkt so geführt werden kann, dass sein Anhänger 22 in der gewünschten Ausrichtung in die Haltebucht 31 bis zur Laderampe 29 fährt.

Die Sensorik 17 kann fahrzeugfest installiert sein und beispielsweise Abstandssensoren umfassen. Bei der mit Bezug auf Fig. 4 erläuterten Ausführungsform kann es auch zweckmäßig sein, ortsfeste Sensoren vorzusehen, die beispielsweise die Annäherung des Anhängers 22 an die Verladerampe 29 sensieren.

Die Bedieneinrichtung 10 kann über Funk mit der Antriebsstrang-Schnittstelle 11 oder dem Bahnrechner 13 verbunden sein, so dass das Fahrzeug fernsteuerbar ist. Anderseits kann die Bedieneinrichtung 10 auch mit dem Bahnrechner 13 zur Übertragung von Signalen direkt über eine Übertragungsleitung gekoppelt sein.

## Patentansprüche

1. Steuerungssystem für ein Fahrzeug (3), insbesondere für ein Gespann aus Zugfahrzeug (21) und Anhänger (22)
- wobei das Fahrzeug (3) mit einem elektronisch ansteuerbaren Antriebsstrang (2) ausgestattet ist, der zumindest eine Lenkungsanlage (6), eine Bremsanlage (7) und ein Antriebsaggregat (4) umfasst,
- wobei eine Bedieneinrichtung (10) vorgesehen ist, in die ein Fahrzeugführer einen Fahrerwunsch (FW) eingibt und die aus dem Fahrerwunsch (FW) einen standardisierten Bewegungsvektor (BV) generiert,
- wobei im Fahrzeug (3) eine Steuereinrichtung (12) angeordnet ist, die aus einem eingangsseitigen Bewegungsvektor (BV) ausgangsseitig Steuersignale (SS) zum Ansteuern des Antriebsstrangs (2) generiert und die zur Übertragung der Steuersignale (SS) mit dem Antriebsstrang (2) gekoppelt ist, der die Steuersignale (SS) zur Umsetzung des Fahrerwunsches (FW) abarbeitet,
**dadurch gekennzeichnet,**
- **dass** eine Antriebsstrang-Schnittstelle (11) vorgesehen ist, über welche die Bedieneinrichtung (10) zur Übertragung des Bewegungsvektors (BV) mit der Steuereinrichtung (12) gekoppelt ist,
- **dass** eine Lage- und Positionsbestimmungseinrichtung (14) vorgesehen ist, die fortlaufend Istwerte für die Lage und Position des Fahrzeugs (3) bestimmt und die zur Übertragung der Istwerte mit einem Bahnrechner (13) gekoppelt ist,
- **dass** eine Zieleingabeeinrichtung (15) vorgesehen ist, in die Sollwerte für die Lage und Position des Fahrzeugs (3) eingebbar sind und die zur Übertragung der Sollwerte mit dem Bahnrechner (13) gekoppelt ist,
- **dass** der Bahnrechner (13) aus den Istwerten und den Sollwerten eine Bewegungsbahn berechnet, die aus einer Abfolge von standardisierten Bewegungsvektoren (BV) besteht, die das Fahrzeug (3) von den Ist-Lagen und Ist-Positionen in die Soll-Lagen und Soll-Positionen überführen, wenn die Bewegungsvektoren (BV) der Bewegungsbahn abgearbeitet werden,
- **dass** der Bahnrechner (13) zusätzlich zur Bedieneinrichtung (10) über die Antriebsstrang-Schnittstelle (11) zur Übertragung der Bewegungsvektoren (BV) mit der Steuereinrichtung (12) gekoppelt ist.

2. Steuerungssystem nach Anspruch 1,
**dadurch gekennzeichnet,**
**dass** der Bahnrechner (13) zur Berechnung einer solchen Bewegungsbahn ausgebildet ist, in welcher das Fahrzeug (3) rückwärts fährt oder welche zumindest einen Bewegungsbahnabschnitt enthält, in dem das Fahrzeug (3) rückwärts fährt.

3. Steuerungssystem nach Anspruch 1 oder 2,
**dadurch gekennzeichnet,**
**dass** der Bahnrechner (13) zur Berechnung einer solchen Bewegungsbahn ausgebildet ist, welche einen Endabschnitt enthält, in dem das Fahrzeug (3) durch Rückwärtsfahrt die Sollwerte für Lage und Position erreicht, und welche einen dem Endabschnitt vorausgehenden Abschnitt enthält, in dem das Fahrzeug (3) durch Vorwärtsfahrt eine Zwischenposition einnimmt, die das Erreichen der Sollwerte durch die Rückwärtsfahrt ermöglicht.

4. Steuerungssystem nach einem der Ansprüche 1 bis 3,
**dadurch gekennzeichnet,**
**dass** der Bahnrechner (13) bei der Berechnung der Bewegungsbahn Fahrzeug-Umgebungsbedingungen berücksichtigt.

5. Steuerungssystem nach Anspruch 4,
**dadurch gekennzeichnet,**
**dass** eine Eingabeeinrichtung (15, 16) vorgesehen ist, über die Fahrzeug-Umgebungsbedingungen dem Bahnrechner (13) mitteilbar sind.

6. Steuerungssystem nach Anspruch 4 oder 5,
**dadurch gekennzeichnet,**
**dass** eine Sensorik (17) vorgesehen ist, die Bedingungen in der Umgebung des Fahrzeugs (3) sensiert und dem Bahnrechner (13) mitteilt.

7. Steuerungssystem nach einem der Ansprüche 4 bis 6,
**dadurch gekennzeichnet,**
**dass** die Fahrzeug-Umgebungsbedingungen wenigstens eine der folgenden Bedingungen umfassen:
- Straßenverlauf,
- Mindestabstand von Hindernissen.

8. Steuerungssystem nach einem der Ansprüche 1 bis 7,
**dadurch gekennzeichnet,**
**dass** der Bahnrechner (13) die Bewegungsbahn anhand aktueller Istwerte fortlaufende aktualisiert.

9. Steuerungssystem nach einem der Ansprüche 1 bis 8,
**dadurch gekennzeichnet,**
**dass** eine Sender-Empfänger-Anordnung (18) vorgesehen ist, über welche der Bahnrechner (13) an die Antriebsstrang-Schnittstelle (11) angeschlossen ist.

10. Steuerungssystem nach einem der Ansprüche 1 bis 9,
**dadurch gekennzeichnet,**
**dass** der Antriebsstrang (2) außerdem ein Getriebe (5) und/oder eine Niveauregulierungseinrichtung (8) umfasst.

11. Steuerungssystem nach einem der Ansprüche 1 bis 10,
**dadurch gekennzeichnet,**
- **dass** das Fahrzeug ein Gespann (3) aus einem Zugfahrzeug (21) und einem Anhänger (22) ist,
- **dass** die Lage- und Positionsbestimmungseinrichtung (14) die Istwerte für die Lage und Position des Zugfahrzeugs (21) und des Anhängers (22) bestimmt,
- **dass** in die Zieleingabeeinrichtung (15) die Sollwerte für die Lage und Position des Zugfahrzeugs (21) und/oder des Anhängers (22) eingebbar sind.

## Claims

1. Control system for a vehicle (3), in particular a yoke comprising a tractor (21) and a trailer (22),
- such that the vehicle (3) is equipped with a drivetrain (2) that can be controlled electronically, which comprises at least a steering unit (6), a brake unit (7) and a drive aggregate (4),
- and an operating unit (10) is provided, into which a vehicle driver can enter a driver's wish (FW) and which, from the said driver's wish (FW), generates a standardised movement vector (BV),
- and in the vehicle (3) is arranged a control unit (12) which, from a movement vector (BV) on its input side, generates control signals (SS) on its output side for the control of the drivetrain (2) and which, for the transmission of the said control signals (SS), is coupled to the drivetrain (2) which reacts to the control signals (SS) so as to implement the driver's wish (FW),
**characterised in that**
- a drivetrain interface (11) is provided, by means of which the operating unit (10) is coupled with the control unit (12 for the transmission of the movement vector (BV),
- an orientation and position determining device (14) is provided, which continuously determines actual values for the orientation and position of the vehicle (3) and which is coupled with a path computer (13) for the transmission of the said actual values,
- a destination input device (15) is provided, into which desired values for the orientation and position of the vehicle (3) can be entered and which is coupled with the path computer (13) for the transmission of the said desired values,
- the path computer (13) calculates from the actual and the desired values a movement path consisting of a sequence of standardised movement vectors (BV), which will move the vehicle (3) from its actual orientation and actual position to the desired orientation and desired position when the movement vectors (BV) of the movement path are implemented,
- and in addition to the operating unit (10) the path computer (13) is coupled via the drivetrain interface (11) to the control unit (12) for the transmission of the movement vectors (BV).

2. Control system according to Claim 1,
**characterised in that**
the path computer (13) is designed to calculate a movement path in which the vehicle (3) drives in reverse or which contains at least one movement path section in which the vehicle (3) reverses.

3. Control system according to Claims 1 or 2,
**characterised in that**
the path computer (13) is designed to calculate a movement path which contains an end section in which the vehicle (3) reaches the desired orientation and position values by reversing, and which contains a section preceding the end section, in which, by driving forwards, the vehicle (3) moves to an intermediate position which enables the desired values to be reached by reversing.

4. Control system according to any of Claims 1 to 3,
**characterised in that**
in calculating the movement path, the path computer (13) takes into account conditions in the surroundings of the vehicle.

5. Control system according to Claim 4,
**characterised in that**
an input device (15, 16) is provided, by means of which the conditions in the vehicle's surroundings can be communicated to the path computer (13).

6. Control system according to Claims 4 or 5,
**characterised in that**
a sensor system (17) is provided, which senses conditions in the surroundings of the vehicle (3) and communicates them to the path computer (13).

7. Control system according to any of Claims 4 to 6,
**characterised in that**
the conditions in the vehicle's surroundings include at least one of the following conditions:
- road condition,
- minimum distance from obstacles.

8. Control system according to any of Claims 1 to 7.
**characterised in that**
the path computer (13) continually updates the movement path with reference to current actual values.

9. Control system according to any of Claims 1 to 8,
**characterised in that**
a sender-receiver arrangement (18) is provided, via which the path computer (13) is connected to the drivetrain interface (11).

10. Control system according to any of Claims 1 to 9,
**characterised in that**
the drivetrain (2) also comprises a transmission (5) and/or a level regulating device (8).

11. Control system according to any of Claims 1 to 10,
**characterised in that**
- the vehicle is a yoke (3) consisting of a tractor (21) and a trailer (22),
- the orientation and position determining device (14) determines the actual values for the orientation and position of the tractor (21) and the trailer (22),
- the desired values for the orientation and position of the tractor (21) and/or the trailer (22) can be entered in the destination input device (15).

## Revendications

1. Système de commande pour un véhicule (3), en particulier pour un ensemble routier composé d'un véhicule tracteur (21) et d'une remorque (22)
- dans lequel le véhicule (3) est équipé d'une chaîne cinématique (2) à commande électronique, qui comprend au moins un système de direction (6), un système de freinage (7) et une unité d'entraînement (4),
- dans lequel on prévoit un dispositif de manoeuvre (10) dans lequel un conducteur de véhicule entre un souhait du conducteur (FW) et qui génère à partir du souhait du conducteur (FW) un vecteur de mouvement (BV) standardisé,
- dans lequel un dispositif de commande (12) agencé dans le véhicule (3) génère à partir du vecteur de mouvement (BV) côté entrée des signaux de commande (SS) côté sortie pour la commande de la chaîne cinématique (2) et est couplé, pour la transmission des signaux de commande (SS), avec la chaîne cinématique (2) qui traite les signaux de commande (SS) pour la transposition du souhait du conducteur (FW),
**caractérisé en ce**
- **qu'**il est prévu une interface de chaîne cinématique (11) par l'intermédiaire de laquelle le dispositif de manoeuvre (10) est couplé, pour la transmission du vecteur de mouvement (BV), avec le dispositif de commande (12),
- **qu'**il est prévu un dispositif de détermination de la situation et de la position (14) qui détermine continuellement des valeurs réelles pour la situation et la position du véhicule (3) et qui, pour la transmission des valeurs réelles, est couplé avec un calculateur de voie (13),
- **qu'**il est prévu un dispositif d'entrée de cible (15) dans lequel des valeurs de consigne pour la situation et la position du véhicule (3) peuvent être entrées et qui est couplé, pour la transmission des valeurs de consigne, avec le calculateur de voie (13),
- **que** le calculateur de voie (13) calcule, à partir des valeurs réelles et des valeurs de consigne, une voie de déplacement qui est constituée d'une séquence de vecteurs de mouvement (BV) standardisés, qui font passer le véhicule (3) des situations réelles et positions réelles aux situations de consigne et positions de consigne lorsque les vecteurs de mouvement (BV) de la voie de déplacement sont traités,
- **que** le calculateur de voie (13) est couplé, en plus du dispositif de manoeuvre (10) par l'intermédiaire de l'interface de chaîne cinématique (11), avec le dispositif de commande (12) pour la transmission des vecteurs de mouvement (BV).

2. Système de commande selon la revendication 1,
**caractérisé en ce**
**que** le calculateur de voie (13) est conçu pour le calcul d'une voie de déplacement dans laquelle le véhicule (3) fait marche arrière ou qui contient au moins un segment de voie de déplacement dans lequel le véhicule (3) fait marche arrière.

3. Système de commande selon la revendication 1 ou 2,
**caractérisé en ce**
**que** le calculateur de voie (13) est conçu pour le calcul d'une voie de déplacement de ce type, qui contient un segment final dans lequel le véhicule (3) atteint par marche arrière les valeurs de consigne de situation et de position et qui contient un segment précédant le segment final dans lequel le véhicule (3) prend par marche avant une position intermédiaire qui permet d'atteindre les valeurs de consigne par marche arrière.

4. Système de commande selon l'une quelconque des revendications 1 à 3,
**caractérisé en ce**
**que** le calculateur de voie (13) prend en compte les conditions environnantes du véhicule pour le calcul de la voie de déplacement.

5. Système de commande selon la revendication 4,
**caractérisé en ce**
**qu'**il est prévu un dispositif d'entrée (15, 16) par lequel des conditions environnantes du véhicule peuvent être communiquées au calculateur de voie (13).

6. Système de commande selon la revendication 4 ou 5,
**caractérisé en ce**
**qu'**il est prévu un système de détection (17) qui détecte les conditions dans l'environnement du véhicule (3) et les communique au calculateur de voie (13) .

7. Système de commande selon l'une quelconque des revendications 4 à 6,
**caractérisé en ce**
**que** les conditions environnantes du véhicule comprennent au moins l'une des conditions suivantes :
- tracé de la route,
- distance minimale des obstacles.

8. Système de commande selon l'une quelconque des revendications 1 à 7,
**caractérisé en ce**
**que** le calculateur de voie (13) actualise continuellement la voie de déplacement à l'aide de valeurs réelles actuelles.

9. Système de commande selon l'une quelconque des revendications 1 à 8,
**caractérisé en ce**
**qu'**il est prévu un agencement émetteur-récepteur (18) par lequel le calculateur de voie (13) est relié à l'interface de chaîne cinématique (11).

10. Système de commande selon l'une quelconque des revendications 1 à 9,
**caractérisé en ce**
**que** la chaîne cinématique (2) comprend également une transmission (5) et/ou un dispositif de régulation de niveau (8).

11. Système de commande selon l'une quelconque des revendications 1 à 10,
**caractérisé en ce**
- **que** le véhicule est un ensemble routier (3) composé d'un véhicule tracteur (21) et d'une remorque (22),
- **que** le dispositif de détermination de la situation et de la position (14) détermine les valeurs réelles de la situation et de la position du véhicule tracteur (21) et de la remorque (22),
- **que** les valeurs de consigne de la situation et de la position du traceur (21) et/ou de la remorque (22) sont entrées dans le dispositif d'entrée de cibles (15).
